# EUROPEAN PATENT SPECIFICATION

(11) **EP 2 164 070 B1**
(45) Date of publication and mention of the grant of the patent: **09.11.2011**
(21) Application number: 09178870.3
(22) Date of filing: 01.09.2005
(51) Int. Cl.: G11B 20/10, G11B 27/30

(54) **Storage medium storing interactive graphics stream, and reproducing apparatus and method**
Speichermedium mit interaktivem Grafikdatenstrom sowie Wiedergabevorrichtung und -verfahren
Support de stockage stockant un flux graphique interactif, et appareil et procédé de reproduction

(30) Priority: 03.09.2004 KR 20040070532
(43) Date of publication of application: 17.03.2010
(62) Divisional of application: 05781097.0
(73) Proprietor: SAMSUNG ELECTRONICS CO., LTD., Suwon-si Gyeonggi-do 442-742 (KR)
(72) Inventor: Jung, Kil-Soo, Hwaseong-si Gyeonggi-do 445-986 (KR); Kang, Man-Seok, Gyeonggi-do (KR)
(74) Representative: Grootscholten, Johannes A.M.

(56) References cited:
- EP-A- 1 638 327
- EP-A- 1 713 269
- WO-A-2005/048261
- WO-A-2005/069304
- ALEXZANDER A: "DVD Studio Pro 3, Parts 1-4" WHAT'S NEW INSIDE - DVD STUDIO PRO 3, XX, XX, no. parts 1-4, 30 June 2004 (2004-06-30), XP002425819
- MARC LOY: "DVD Studio Pro 3: In the Studio" 26 October 2004 (2004-10-26), O'REILLY MEDIA, INC. , XP002515516 * page 103 - page 109 *

## Description

### Technical Field

An aspect of the present invention relates to multimedia reproduction, and more particularly, to a storage medium storing an interactive graphics stream providing a menu having a variety of screen conversion effects, and a reproducing apparatus and a reproducing method.

### Background Art

To reproduce a multimedia image, audio- visual (AV) data of the multimedia image, navigation data for controlling the reproduction of the AV data, and system data including command information related to a title of AV data to be reproduced first when the storage medium is inserted in a reproducing apparatus are recorded in a storage medium. Other data can also be recorded in the storage medium. In particular, an interactive graphics stream of the present invention is multiplexed as the main stream including video, audio, and subtitles and recorded in the storage medium, or is not multiplexed as the main stream and is recorded as a separate file in the storage medium.

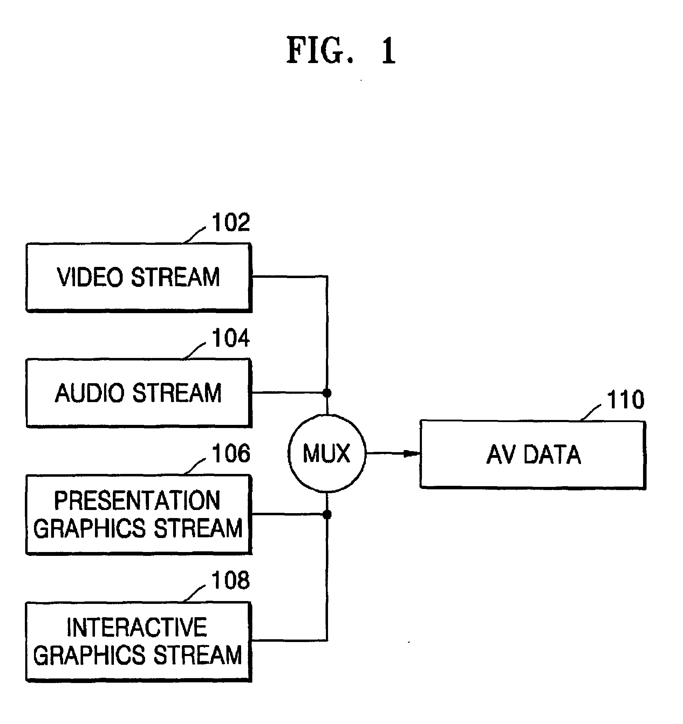

FIG. 1 is a block diagram of AV data including a variety of multiplexed streams. Referring to FIG. 1, in a storage medium storing a multimedia image, a video stream 102, an audio stream 104, a presentation graphic stream 106 for providing a subtitle, and an interactive graphics stream 108 for providing a menu screen to support a user interactive operation are multiplexed and recorded as the main stream. Hereinafter, the multiplexed main stream is called AV data 110. Although not shown, the interactive graphics stream can be recorded as a separate file in the storage medium instead of being multiplexed as the main stream.

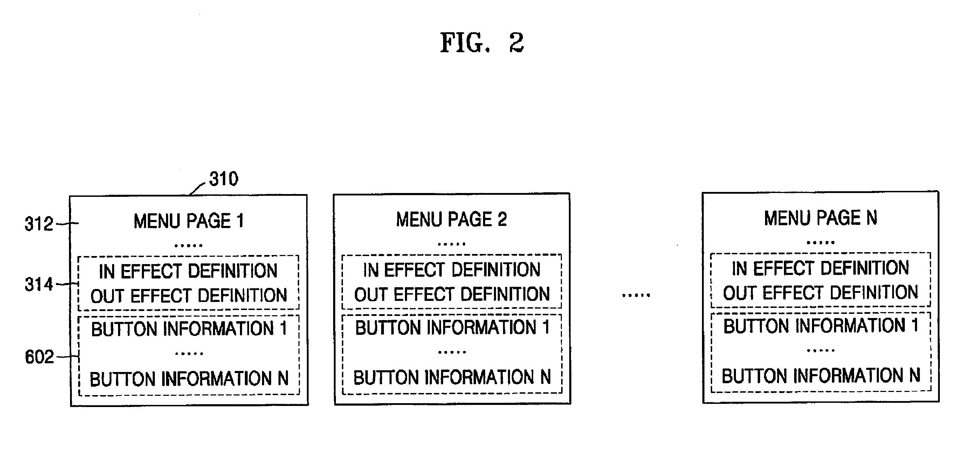

FIG. 2 illustrates the configuration of a plurality of menu pages included in the interactive graphics stream 108. Referring to FlG. 2, the interactive graphics stream 108 for providing a menu screen includes a plurality of menu pages 1 through N. A menu page is used to display a menu on a screen. Each menu page includes effect information 314 including in-effect information, to be executed when a menu page appears, out-effect information, to be executed when a menu page disappears, and information 602 on buttons. Among a plurality of buttons included in a menu page, some buttons contain a navigation command to move to another menu page, thereby implementing the plurality of menu pages. When a menu page conversion occurs, each menu page includes screen conversion information (i.e. the in-effect information and the out-effect information included in the effect information 314) in order to display active movements of buttons to appear or disappear. That is, when a button is used to change from one menu page to the next menu page, an out-effect of the specific menu page is executed, an in-effect of the next menu page is executed, and the next menu page is displayed on the screen. However, such a screen conversion effect of the menu page causes the following problems.

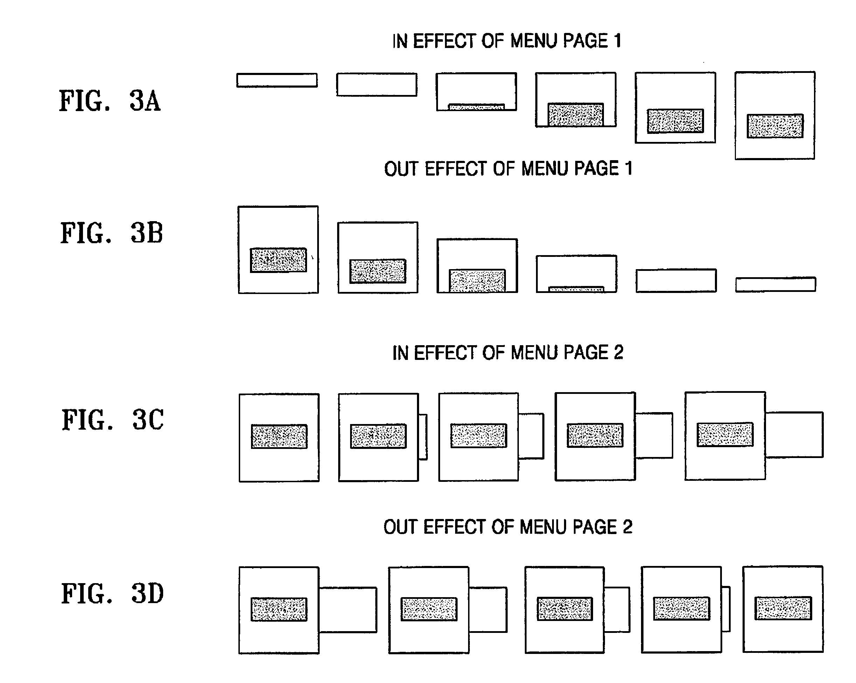

First, when a menu page conversion occurs, the screen conversion effect of a menu page is unconditionally executed in the order of the out-effect of a menu page and the in-effect of the next menu page, making the screen conversion effect unnatural. To be more specific, FIGs. 3A through 3D illustrate problems caused when the configuration of the plurality of menu pages shown in FIG. 2 is used to display a menu screen. Referring to FIGs. 3A through 3D, when a manufacturer wants the effect of a sliding sub menu for a button or graphical interface of a main menu, such an effect is executed using two menu pages. A menu page 1 has a screen conversion effect of slowly appearing when required on the screen, and slowly disappearing when not required on the screen as shown in FIGs. 3A and 3D. A menu page is required to be displayed on the screen at a time indicated by a Presentation Time Stamp (PTS) to display a menu, when a main menu appears due to a user's operation such as by pushing of a button for a pop-up menu, or when a main menu appears due to a button navigation command of another menu page. A menu page is not required to be displayed when a valid reproduction period expires or a main menu disappears due to the user's operation such as the pushing of the button for the pop-up menu. To this end, the in-effect is used to make the menu page 1 slowly larger and the out-effect is used to make the menu page 1 slowly smaller. The screen conversion effect does not require a plurality of images, but an image such as a last in-effect image or a first out-effect image. An image is cropped to display a desired part thereof on a predetermined window region. A button of the menu page 1 has a navigation command to move to a menu page 2.

FIG's. 3C and 3D illustrate an in-effect and an out-effect of the menu page 2. When the button of the menu page 1 is executed, the in-effect makes a sub menu slide into view and the out-effect makes the sub menu slide away.

The disclosure of A. Alexander: "DVD Studio Pro 3, Parts 1-4", "what's new inside - DVD studio pro 3, XX, XX, No. parts 1-4", of 30 June 2004, XP-002425819 is acknowledged here as closest prior art. Further the contents of WO-2005/069304 and WO-2005/048261 is herewith acknowledged to constitute prior art not yet published at the effective filing date for the present invention.

### Technical Problem

However, such a combination of two menu pages makes it impossible to display a menu desired by the manufacturer, since an execution of the button of the menu page 1 (i.e., a main menu) does not naturally make the sub menu slide into view. Because an execution of the out-effect of the menu page 1 makes the menu page 1 completely disappear, and then the main menu suddenly appear on the screen according to the execution of the in-effect of the menu page 2 while the sub menu slowly appears. That is, when the menu page conversion occurs, e.g. a disappear effect, an undesired effect is unconditionally executed, making a desired screen conversion unnatural.

Also, when a menu page is displayed from or navigated to a plurality of different menu pages, the menu page must execute a variety of screen conversion effects according to the position of a button of another menu page to be converted. However, a variety of screen conversion effects, e.g. disappear effects, are not executed by a conventional menu page.

### Technical Solution

According to an aspect of the present invention, there is provided a storage medium and a reproducing apparatus and a reproducing method, as well as a computer readable medium, according to respective appended independent claims.

### Advantageous Effects

According to an aspect of the present invention, there is provided a storage medium storing an interactive graphics stream providing a menu having a variety of screen conversion effects capable of active navigation as a consequence of in particular the possibility of the feature of a disappearing effect, and a reproducing apparatus.

### Description of Drawings

FIG. 1 is a block diagram of audio- visual (AV) data including a variety of multiplexed streams;
FIG. 2 illustrates the configuration of a plurality of menu pages included in an interactive graphics stream;
FIG. 3A through 3D illustrate problems caused when the configuration of the plurality of menu pages shown in FIG. 2 is used to display a menu screen;
FIG. 4 is a block diagram illustrating an AV data reproducing apparatus according to an embodiment of the present invention;
FIG. 5 illustrates the configuration of a plurality of menu pages including control information required to activate a screen conversion effect according to an aspect of the invention;
FIG. 6 illustrates the configuration of a menu page defining a variety of screen conversion effects according to an embodiment of the present invention;
FIG. 7 illustrates the plurality of menu pages of FIG. 6 displayed on a screen; and
FIG. 8 is a flowchart illustrating a method of reproducing the interactive graphics stream according to an embodiment of the present invention.
FIG. 9 illustrates a block diagram of a conventional recording and/or reproducing apparatus.

### Best Mode

According to an aspect of the present invention, there is provided a storage medium storing multimedia information, the storage medium comprising all features in combination of the appended storage medium claim.

Accordingly, preferred aspects of the present invention are defined in the appended storage medium related dependent claims.

According to another aspect of the present invention, there is provided a reproducing apparatus and method, including all features of the appended apparatus and method related, independent claims.

### Mode for Invention

Reference will now be made in detail to the present embodiments of the present invention, examples of which are illustrated in the accompanying drawings, wherein like reference numerals refer to the like elements throughout. The embodiments are described below in order to explain the present invention by referring to the figures.

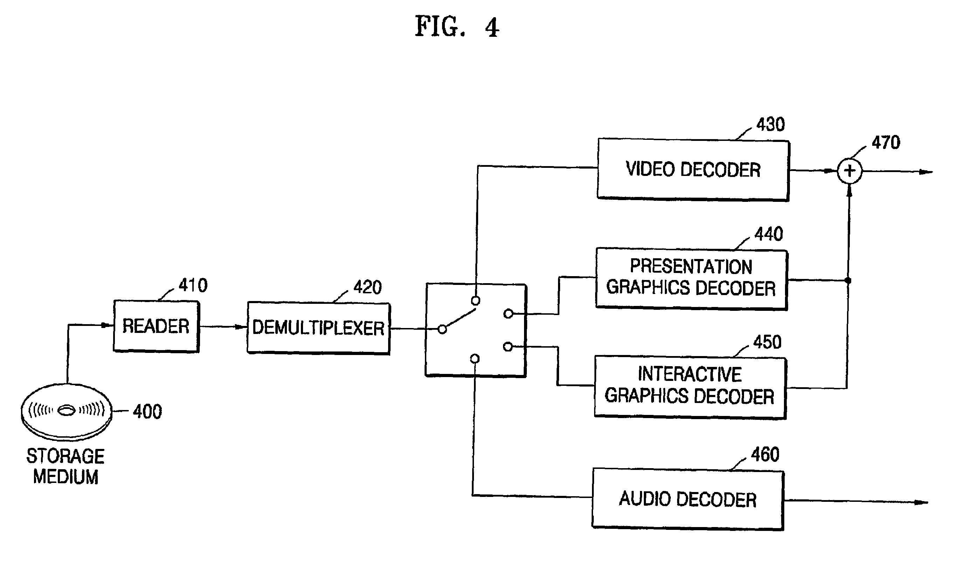

FlG. 4 is a block diagram illustrating an AV data 110 reproducing apparatus according to an embodiment of the present invention. Referring to FlG. 4, the AV data 110 reproducing apparatus includes a reader 410, a demultiplexer 420, decoders 430 through 460, and a blender 470. While described in terms of a reproducing apparatus, it is understood that an aspect of the invention can be implemented in a device that records data in addition to reproducing the data.

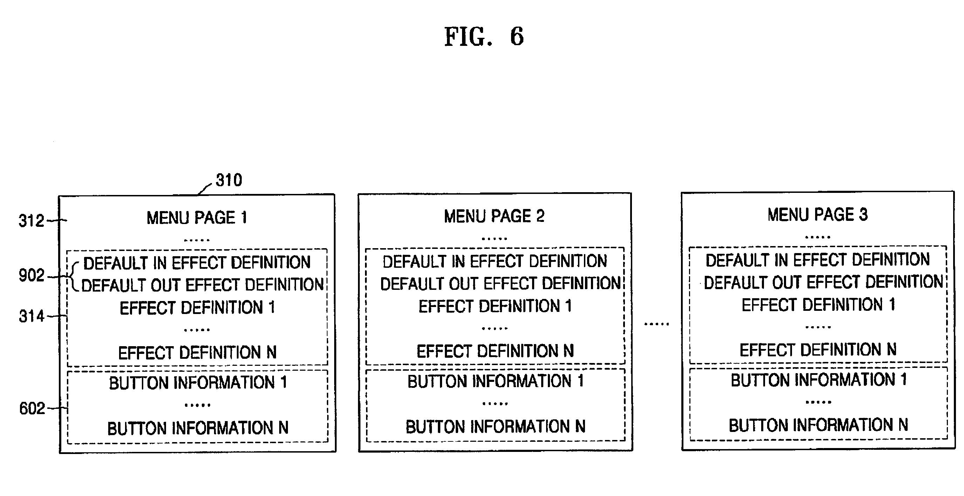

The reader 410 reads multiplexed AV data 110 from a storage medium 400 and transmits the multiplexed AV data 110 to the demultiplexer 420. The demultiplexer 420 divides the received AV data 110 into the video stream 102, the audio stream 104, the presentation graphic stream 106, and the interactive graphics stream 108 (shown in FlG. 6), and transmits the divided streams 102 through 108 to the decoders 430 through 460, respectively. Each stream transmitted to the respective decoder is decoded according to a corresponding data type, and all are ready to be displayed on a screen at a designated time. The decoded video stream 102, the presentation graphic stream 106, and/or the interactive graphics stream 108 are overlaid as a single image using the blender 470. Finally, an image selected based on an output status set by a user is displayed on the screen (not shown). For example, the output status can be controlled based on a user's selection such as of a subtitle on/off status or a mute status. The storage medium 400 is not restricted and can be an optical storage medium (such as a CD, DVD, Bluray disks, HD DVD, AOD) a magnetic medium, a magneto optical medium, and/or flash memory.

In particular, the interactive graphics decoder 450 receives the interactive graphics stream (such as the stream 108 shown in FIG. 6) from the storage medium 400, decodes the interactive graphics stream 108, and outputs a menu screen including buttons or graphical user interfaces on the screen (not shown) at a designated time. A user's selection can be input by selecting a specific button or a graphical user interface on the output menu screen using an input device, such as a button, mouse, touch screen, or other such device. That is, a user interactive function can be provided.

While not required, the interactive graphics stream 108 can be separate from the AV data 110 and recorded in the format of out-of-mux in the storage medium 400 according to an aspect of the invention.

The present invention provides the interactive graphics stream 608 including a navigation command to determine whether to execute a screen conversion effect included in a menu page, in order to execute a natural screen conversion effect in a menu page having a variety of reproducing orders. The interactive graphics stream 108 which can properly execute a screen conversion effect desired by a manufacturer includes one or more menu pages for implementing a single menu screen; each menu page including in-effect information to be executed when a menu page appears on the menu screen; each menu page including out-effect information to be executed when a menu page disappears from the menu screen; and a button or graphical user interface containing a navigation command to move to another menu page further including a navigation command to determine whether to execute the screen conversion effect information 314 of the in-effect information and the out-effect information.

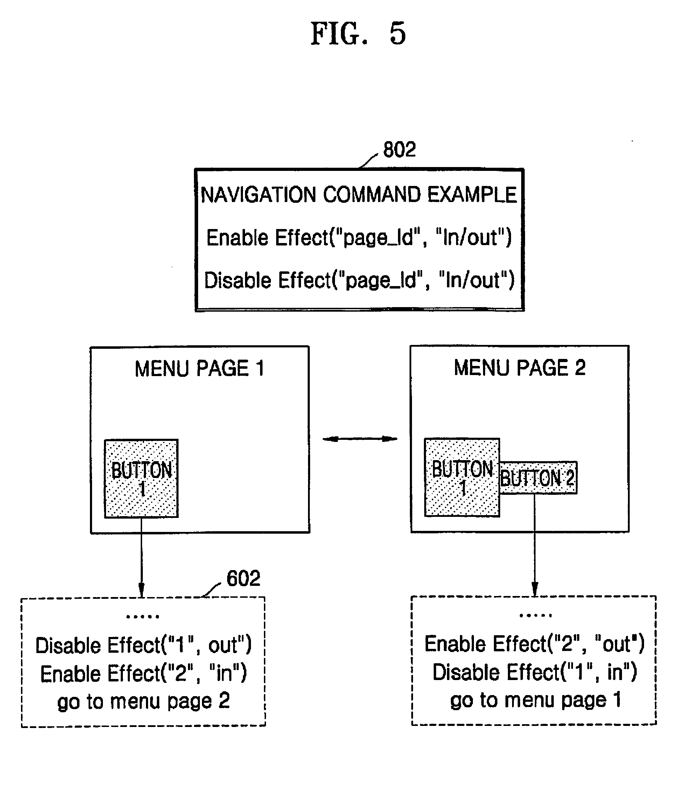

FIG. 5 illustrates the configuration of a plurality of menu pages including control information 802 required to activate a screen conversion effect. Referring to FIG. 5, the interactive graphics stream 108 further includes a navigation command to determine whether to execute the in-effect information and the out-effect information as the control information 802 required to activate the screen conversion effect. That is, the navigation command contains 'Enable' and 'Disable' commands to determine whether to execute the in-effect information and the out-effect information, and uses a page ID 'page_id' and information 'in/out' designating the corresponding in-effect information or the out-effect information as parameters. The control information 802 is a part of button information or graphical user interface 602 (i.e., a group of navigation commands to be executed), when a button or interface is pressed.

A menu page 1 and a menu page 2 can have the same screen conversion effect as that shown in FIG's. 3 A through 3D. An in-effect of the menu page 1 makes a button or graphical user interface 1 fade in, and an out-effect of the menu page 1 makes the button or graphical user interface 1 fade out. An in-effect of the menu page 2 makes a button or graphical user interface 2 slide out from the button or graphical user interface 1 while displaying the button or graphical user interface 1 on the screen, and an out- effect of the menu page 2 makes the button or graphical user interface 2 slide away while displaying the button or graphical user interface 1 on the screen. However, it is understood that other effects can be used.

When the interactive graphics stream 108 is reproduced by a reproducing apparatus without being controlled, as described with reference to FIG's. 3A through 3D, no menu is displayed since an execution of the button of the menu page 1 (i.e., a main menu), does not naturally make the sub menu slide out. An execution of the out-effect of the menu page 1 makes the menu page 1 completely disappear from the screen as shown in FIG's. 3 A and 3B, and the main menu which disappeared along with the in- effect of the menu page 2 suddenly reappears on the screen while the sub menu slowly appears as shown in FIG's. 3C and 3D. That is, when the menu page conversion occurs, an undesired effect is unconditionally executed, making a desired screen conversion unnatural. Therefore, as compared to the interactive graphics stream 108 of FIG. 2, the interactive graphics stream 608 includes a Disable Effect (T, 'out') and an Enable Effect ('2', 'in') as button commands of the menu page 1, such that a conversion between the menu page 1 and the menu page 2 does not result in executing the out- effect of the menu page 1, making the screen conversion effect natural.

FIG. 6 illustrates the configuration of an interactive graphics stream 608 having menu pages 1 through 3 defining a variety of screen conversion effects according to an embodiment of the present invention. Referring to FIG. 6, the interactive graphics stream 108 which can properly execute a screen conversion effect according to a variety of reproducing orders includes a plurality of conversion effect information items 314. The interactive graphics stream 108 includes one or more menu pages for implementing a menu screen. Each menu page includes default in-effect information 902 to be executed when a menu page appears on the menu screen and each menu page has no navigation command to control the screen conversion effect. Each menu page includes default out-effect information 902 to be executed when a menu page disappears from the menu screen and each menu page has no navigation command to control the screen conversion effect. Each menu page includes a plurality of conversion effect definition information items 1 to N executed by the navigation command to control the screen conversion effect when a menu page conversion occurs. Each menu page includes button information 1 to N containing a navigation command to move to another menu page further including a navigation command to determine whether to execute screen conversion effect information of the default in-effect information and the default out-effect information and control to execute one of the plurality of conversion effect information items 314.

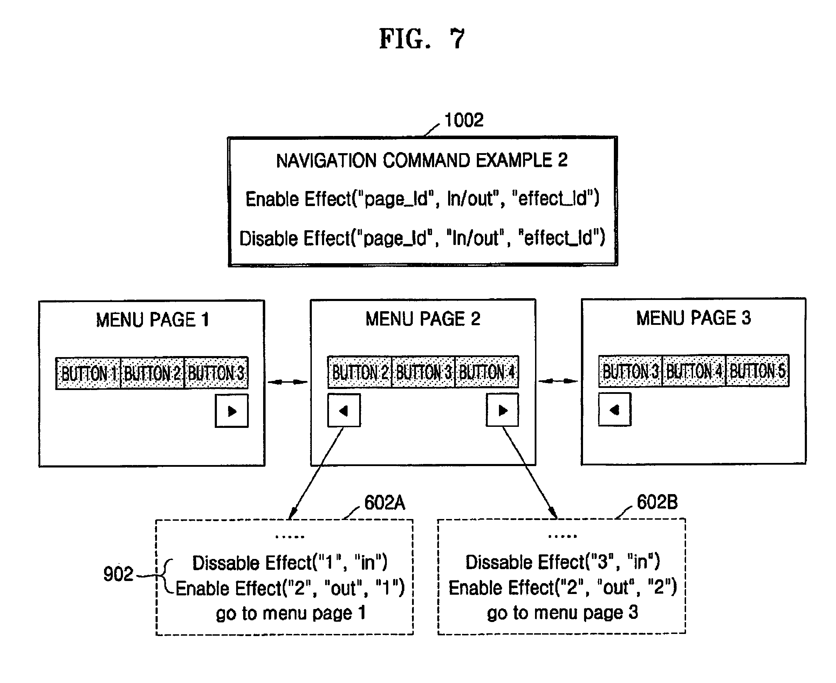

FIG. 7 illustrates the plurality of menu pages of FIG. 6 displayed on a screen. Referring to FIG's. 6 and 7, the interactive graphics stream 108 includes a navigation command 1002 to control a screen conversion effect to be executed when a menu page conversion occurs, and a plurality of conversion effect information items 314 in each menu page.

Each execution of a button or graphical user interface converts a menu page into a plurality of different menu pages. Referring to FIG. 6, a definition of one in-effect and one out-effect as shown in FIG. 6 cannot properly implement a screen conversion effect desired by a manufacturer. Referring to FIG. 7, when a left arrow button or graphical user interface in a menu page 2 is pressed, buttons or graphical user interfaces 1, 2, and 3 are displayed, whereas, when a right arrow button or graphical user interface of the menu page 2 is pressed, buttons or graphical user interfaces 3, 4, and 5 are displayed. Since the two buttons or graphical user interfaces implement a different screen conversion effect, it is conventionally impossible to implement the screen conversion effect desired by the manufacturer.

The menu page according to an embodiment of the present embodiment may have the plurality of screen conversion definition effect information items as shown in FIG. 6. As shown in FIG. 7, a navigation command to control the screen conversion effect may further have a parameter 'effect_id' that selects one of plurality of screen conversion effect information items 314. When a menu page conversion occurs, one of plurality of screen conversion effect information items included in a specific menu page can be selected and executed.

Referring back to FIG. 7, when a screen conversion from the menu page 2 to a plurality of different menu pages occurs, like left button information 602 A, an in- effect of a menu page 1 is not displayed, but an out-effect of the menu page 2 executes conversion effect information having ID 1 among the plurality of screen conversion effect information items, thereby converting to the menu page 1. Meanwhile, like right button information 602 B, when the right arrow button is pressed, a different screen conversion effect, i.e. an in-effect of a menu page 3, is not displayed, but the out-effect of the menu page 2 executes conversion effect information having ID 2 among the plurality of screen conversion effect information items. Therefore, one of a variety of screen conversion effects can be designated.

Since the menu page 2 includes default conversion effect information 902, a screen conversion effect can be designated when the navigation command included in the button command is not executed, e.g. when a first page is displayed, a menu page disappears after a valid reproduction period, or the menu page is displayed or disappears due to a user operation such as pushing a popup button or a pop off button included in a user input device such as remote controllers. As such, the definition items 1 to N 904 correspond to button information 1 to N. While shown as being of the same number, it is understood that the number of definition items can be other than the number of button information items.

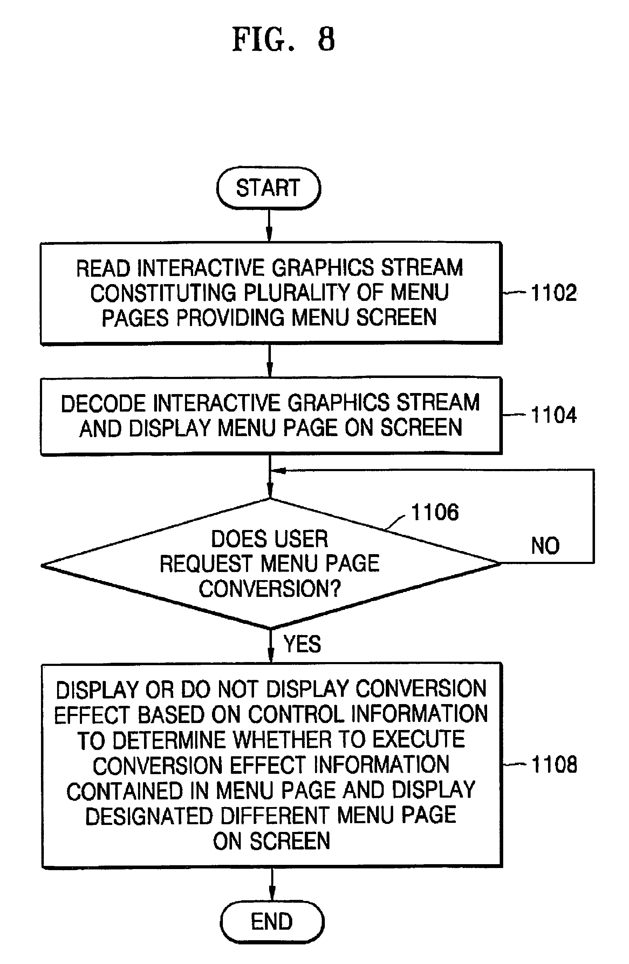

FIG. 8 is a flowchart illustrating a method of reproducing the interactive graphics stream according to an embodiment of the present invention. Referring to FIG. 8, to effectively display a menu screen, an interactive graphics stream 608 constituting a plurality of menu pages providing the menu screen is read (Operation 1102). The interactive graphics stream 608 is decoded and a menu page is displayed on a screen (Operation 1104). When a user requests a menu page conversion (Operation 1106) (i.e. the user presses a button or graphical user interface including a menu page conversion command) or the popup button or graphical user interface or the pop off button or graphical user interface included in the user input device, a conversion effect is displayed or not based on control information to determine whether to execute conversion effect information contained in the menu page, and a designated different menu page is displayed on the screen (Operation 1108).

It is possible for an embodiment of the present invention to be realized on a computer-readable recording medium as computer-readable code to be implemented by a general or special purpose computer. Computer-readable recording media include every kind of recording device that stores computer system-readable data. ROMs, RAMs, CD-ROMs, magnetic tapes, floppy discs, optical data storage, etc. are examples of computer-readable recording media. Computer-readable recording media can also be realized in the form of a carrier wave (e.g., transmission through internet). A computer-readable recording medium can be dispersed in a network-connected computer system, resulting in being stored and executed as distributed code.

Also, while described in terms of video data, it is understood that menus can be generated over other types of data, such as still images and/or text in addition to or instead of video data.

Button or graphical user interface information included in each menu page includes a navigation command to determine whether to execute conversion effect information or a navigation command to select and control whether to execute conversion effect information among a plurality of conversion effect information items, thereby designating one of a plurality of conversion effect information items and determining to execute designated conversion effect information when a menu page conversion occurs and effectively displaying various screen conversion effects.

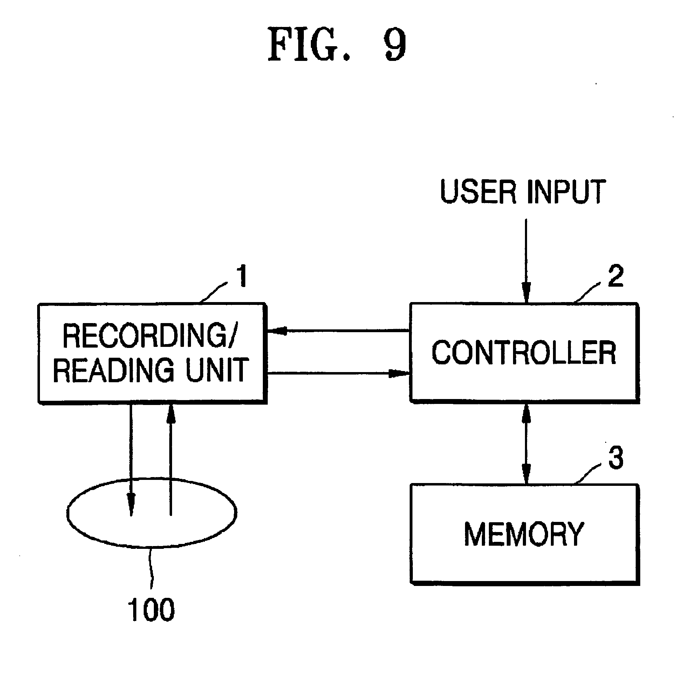

FIG. 9 is a block diagram of a recording and/or reproducing apparatus corresponding to an aspect of the invention. Referring to FIG. 9, the recording apparatus includes a recording/reading unit 1, e.g., a pickup, a controller 2, and a memory 3. The recording/reading unit 1 records data on a recording medium 100, which of course could be a recording medium according to embodiments of the present invention, and reads data from the recording medium 100. Similarly, the controller 2 records and reproduces disc related data according to embodiments of the present invention as set forth below in relation to FIG's. 4-8.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A storage medium storing multimedia information for use with a recording and/or reproducing apparatus, the storage medium comprising:
- video data; and
- graphics data for displaying a menu screen overlaid on an image displayed on the basis of the video data, the graphics data comprising data specifying at least one menu page used by the apparatus for implementing the menu screen, the data specifying each menu page comprising a plurality of screen conversion effect information items and graphical user interface information containing a navigation command, the plurality of screen conversion effect information items including in-effect information to be executed by the apparatus when a corresponding menu page appears on the menu screen and out-effect information to be executed by the apparatus when the corresponding menu page disappears from the menu screen, the navigation command allowing movement to another of the at least one menu page, wherein the navigation command is used by the apparatus to determine whether to execute the out-effect information.

2. The storage medium of claim 1, wherein the navigation command contains enable and disable commands to determine whether to execute the in-effect information and the out-effect information.

3. The storage medium of claim 1 or 2, wherein the navigation command includes an identifier of a menu page and an identifier of a screen conversion effect information item.

4. A reproducing apparatus for reproducing multimedia information from a storage medium, the apparatus comprising:
- a video decoder which decodes video data; and
- a graphics decoder which decodes graphics data for displaying a menu screen overlaid on an image displayed on the basis of the video data, the graphics data comprising data specifying at least one menu page used by the apparatus for implementing a menu screen, the data specifying each menu page comprising a plurality of screen conversion effect information items and graphical user interface information containing a navigation command, the plurality of screen conversion effect information items including in-effect information to be executed when a corresponding menu page appears on the menu screen and out-effect information to be executed when the corresponding menu page disappears from the menu screen, the navigation command allowing movement to another of the at least one menu page, wherein the navigation command is used to determine whether to execute the out-effect information;
- a controller which executes the plurality of screen conversion information items based on the navigation command when the movement to another of the at least one menu page occurs.

5. A reproducing method for reproducing multimedia information from a storage medium, the method comprising:
- decoding video data; and
- decoding graphics data for displaying a menu screen overlaid on an image displayed on the basis of the video data, the graphics data comprising data specifying at least one menu page used for implementing the menu screen, the data specifying each menu page comprising a plurality of screen conversion effect information items and graphical user interface information containing a navigation command, the plurality of screen conversion effect information items including in-effect information to be executed when a corresponding menu page appears on the menu screen and out-effect information to be executed when the corresponding menu page disappears from the menu screen, the navigation command allowing movement to another of the at least one menu page, wherein the navigation command is used to determine whether to execute the out-effect information;
- executing the plurality of screen conversion information items based on the navigation command when the movement to another of the at least one menu page occurs.

6. A computer readable medium encoded with processing instructions for performing the method of claim 5, as performed by a computer.

## Patentansprüche

1. Multimediainformationen speicherndes Speichermedium zur Verwendung mit einer Aufzeichnungs- und / oder Wiedergabevorrichtung, das Speichermedium umfassend:
- Videodaten; und
- Graphikdaten zum Anzeigen eines Menüschirms, der auf ein auf Basis der Videodaten angezeigtes Bild gelegt ist, wobei die Graphikdaten Daten umfassen, die zumindest eine Menüseite spezifizieren, die von der Vorrichtung zum Implementieren des Menüschirms verwendet wird, wobei die Daten jede Menüseite spezifizieren, die eine Mehrzahl von Schirmwandlungseffekt-Informationselementen und graphische Benutzerschnittstelleninformationen umfasst, die einen Navigationsbefehl enthalten, wobei die Mehrzahl von Schirmwandlungseffekt-Informationselementen Hinein-Effekt-Informationen einschließt, die von der Vorrichtung auszuführen sind, wenn eine entsprechende Menüseite auf dem Menüschirm erscheint, und Hinaus-Effekt-Informationen, die von der Vorrichtung auszuführen sind, wenn die entsprechende Menüseite vom Menüschirm verschwindet, wobei der Navigationsbefehl Bewegung zu einer anderen der zumindest einen Menüseite ermöglicht, wobei der Navigationsbefehl von der Vorrichtung verwendet wird, um zu bestimmen, ob die Hinaus-Effekt-Informationen ausgeführt werden.

2. Speichermedium nach Anspruch 1, wobei der Navigationsbefehl Ein- und Ausschaltbefehle enthält, um zu bestimmen, ob die Hinein-Effekt-Informationen und die Hinaus-Effekt-Informationen ausgeführt werden.

3. Speichermedium nach Anspruch 1 oder 2, wobei der Navigationsbefehl einen Identifikator einer Menüseite und einen Identifikator eines Schirmwandlungseffekt-Informationselements einschließt.

4. Wiedergabevorrichtung zur Wiedergabe von Multimediainformationen von einem Speichermedium, die Vorrichtung umfassend:
- einen Videodecoder, der Videodaten decodiert; und
- einen Graphikdecoder, der Graphikdaten zum Anzeigen eines Menüschirms decodiert, der auf ein auf Basis der Videodaten angezeigtes Bild gelegt ist, wobei die Graphikdaten Daten umfassen, die zumindest eine Menüseite spezifizieren, die von der Vorrichtung zum Implementieren eines Menüschirms verwendet wird, wobei die Daten jede Menüseite spezifizieren, die eine Mehrzahl von Schirmwandlungseffekt-Informationselementen und graphische Benutzerschnittstelleninformationen umfasst, die einen Navigationsbefehl enthalten, wobei die Mehrzahl von Schirmwandlungseffekt-Informationselementen Hinein-Effekt-Informationen einschließt, die auszuführen sind, wenn eine entsprechende Menüseite auf dem Menüschirm erscheint, und Hinaus-Effekt-Informationen, die auszuführen sind, wenn die entsprechende Menüseite vom Menüschirm verschwindet, wobei der Navigationsbefehl Bewegung zu einer anderen der zumindest einen Menüseite ermöglicht, wobei der Navigationsbefehl verwendet wird, um zu bestimmen, ob die Hinaus-Effekt-Informationen ausgeführt werden;
- einen Controller, der die Mehrzahl von Schirmwandlungseffekt-Informationselementen auf Grundlage des Navigationsbefehls ausführt, wenn die Bewegung zu einer anderen der zumindest einen Menüseite stattfindet.

5. Wiedergabeverfahren zur Wiedergabe von Multimediainformationen von einem Speichermedium, das Verfahren umfassend:
- Decodieren von Videodaten; und
- Decodieren von Graphikdaten zum Anzeigen eines Menüschirms, der auf ein auf Basis der Videodaten angezeigtes Bild gelegt ist, wobei die Graphikdaten Daten umfassen, die zumindest eine zum Implementieren des Menüschirms verwendete Menüseite spezifizieren, wobei die Daten jede Menüseite spezifizieren, die eine Mehrzahl von Schirmwandlungseffekt-Informationselementen und graphische Benutzerschnittstelleninformationen umfasst, die einen Navigationsbefehl enthalten, wobei die Mehrzahl von Schirmwandlungseffekt-Informationselementen Hinein-Effekt-Informationen einschließt, die auszuführen sind, wenn eine entsprechende Menüseite auf dem Menüschirm erscheint, und Hinaus-Effekt-Informationen, die auszuführen sind, wenn die entsprechende Menüseite vom Menüschirm verschwindet, wobei der Navigationsbefehl Bewegung zu einer anderen der zumindest einen Menüseite ermöglicht, wobei der Navigationsbefehl verwendet wird, um zu bestimmen, ob die Hinaus-Effekt-Informationen ausgeführt werden;
- Ausführen der Mehrzahl von Schirmwandlungseffekt-Informationselementen auf Grundlage des Navigationsbefehls, wenn die Bewegung zu einer anderen der zumindest einen Menüseite stattfindet.

6. Computerlesbares Medium, codiert mit Verarbeitungsanweisungen zur Durchführung des Verfahrens nach Anspruch 5, wie von einem Computer durchgeführt.

## Revendications

1. Support d'enregistrement permettant de mémoriser des informations multimédia par l'intermédiaire d'un appareil d'enregistrement et/ou de reproduction, le support d'enregistrement comprenant :
- des données vidéos ; et
- des données graphiques permettant l'affichage d'un menu superposé à une image affichée conformément aux données vidéos, les données graphiques comprenant des données spécifiant au moins une page de menu utilisée par l'appareil pour mettre en place l'écran menu, les données spécifiant chaque page de menu comprenant une pluralité d'informations d'effets de conversion d'écran et des informations d'interface utilisateur graphique contenant une commande de navigation, la pluralité d'informations d'effets de conversion d'écran comportant des informations d'effet d'entrée devant être exécutées par l'appareil lorsqu'une page de menu correspondante apparaît sur l'écran menu et des informations d'effet de sortie devant être exécutées par l'appareil lorsque la page de menu correspondante disparaît de l'écran menu, la commande de navigation permettant de passer à une autre de l'au moins une page de menu, la commande de navigation étant utilisée par l'appareil pour déterminer s'il y a lieu d'exécuter les informations d'effet de sortie.

2. Support d'enregistrement selon la revendication 1, dans lequel la commande de navigation contient des commande d'activation et de désactivation servant à déterminer s'il y a lieu d'exécuter les informations d'effet d'entrée et les informations d'effet de sortie.

3. Support d'enregistrement selon la revendication 1 ou 2, dans lequel la commande de navigation comprend un identificateur d'une page de menu et un identificateur d'une information d'effet de conversion d'écran.

4. Appareil de reproduction d'informations multimédia à partir d'un support d'enregistrement, l'appareil comprenant :
- un décodeur vidéo qui décode des données vidéos ; et
- un décodeur de données graphiques qui décode des données graphiques permettant l'affichage d'un écran menu superposé à une image affichée conformément aux données vidéos, les données graphiques comprenant des données spécifiant au moins une page de menu utilisée par l'appareil pour mettre en place un écran menu, les données spécifiant chaque page de menu comprenant une pluralité d'informations d'effets de conversion d'écran et des informations d'interface utilisateur graphique contenant une commande de navigation, la pluralité d'informations d'effets de conversion d'écran comportant des informations d'effet d'entrée devant être exécutées par l'appareil lorsqu'une page de menu correspondante apparaît sur l'écran menu et des informations d'effet de sortie devant être exécutées par l'appareil lorsque la page de menu correspondante disparaît de l'écran menu, la commande de navigation permettant de passer à une autre de l'au moins une page de menu, la commande de navigation étant utilisée pour déterminer s'il y a lieu d'exécuter les informations d'effet de sortie ;
- un contrôleur qui exécute une pluralité d'informations de conversion d'écran en fonction de la commande de navigation lorsqu'il se produit le passage à une autre de l'au moins une page de menu.

5. Procédé de reproduction d'informations multimédia à partir d'un support d'enregistrement, le procédé comprenant :
- le décodage de données vidéos ; et
- le décodage de données graphiques permettant l'affichage d'un écran menu superposé à une image affichée conformément aux données vidéos, les données graphiques comprenant des données spécifiant au moins une page de menu utilisée pour mettre en place un écran menu, les données spécifiant chaque page de menu comprenant une pluralité d'informations d'effets de conversion d'écran et des informations d'interface utilisateur graphique contenant une commande de navigation, la pluralité d'informations d'effets de conversion d'écran comportant des informations d'effet d'entrée devant être exécutées lorsqu'une page de menu correspondante apparaît sur l'écran menu et des informations d'effet de sortie devant être exécutées lorsque la page de menu correspondante disparaît de l'écran menu, la commande de navigation permettant de passer à une autre de l'au moins une page de menu, la commande de navigation étant utilisée pour déterminer s'il y a lieu d'exécuter les informations d'effet de sortie ;
- l'exécution de la pluralité d'informations de conversion d'écran en fonction de la commande de navigation lorsqu'il se produit le passage à une autre de l'au moins une page de menu.

6. Support lisible par ordinateur, porteur d'instructions de traitement visant à mettre en oeuvre le procédé selon la revendication 5 exécuté par un ordinateur.
